# FASCICULE DE BREVET EUROPEEN

(11) **EP 1 554 155 B1**
(45) Date de publication et mention de la délivrance du brevet: **19.11.2008**
(21) Numéro de dépôt: 03755596.8
(22) Date de dépôt: 11.07.2003
(51) Int. Cl.: B60W 20/00, B60W 10/06, B60W 10/08, B60K 6/46

(54) **PROCEDE DE GESTION DE RESSOURCES ENERGETIQUES POUR UN VEHICULE HYBRIDE SERIE**
ENERGIEFLUSSERHALTUNGSSYSTEM FÜR SERIELLES HYBRIDFAHRZEUG
METHOD FOR MANAGING ENERGY RESOURCES FOR A SERIES HYBRID VEHICLE

(30) Priorité: 19.07.2002 FR 0209219
(43) Date de publication de la demande: 20.07.2005
(73) Titulaire: RENAULT S.A.S., 92100 Boulogne Billancourt (FR)
(72) Inventeur: BELLICAUD, Fabrice, F-78125 La Boissière Ecole (FR); DE VIRY, Vincent, F-78000 Versailles (FR); FRICOU, Hervé, F-91400 Saclay (FR)
(86) Numéro de dépôt international: PCT/FR2003/002203
(87) Numéro de publication internationale: WO 2004/009395

(56) Documents cités:
- EP-A- 1 127 734
- US-A- 6 137 250
- PATENT ABSTRACTS OF JAPAN vol. 018, no. 446 (M-1659), 19 août 1994 (1994-08-19) & JP 06 141406 A (NISSAN MOTOR CO LTD), 20 mai 1994 (1994-05-20)
- PATENT ABSTRACTS OF JAPAN vol. 1997, no. 10, 31 octobre 1997 (1997-10-31) & JP 09 154205 A (AQUEOUS RES:KK), 10 juin 1997 (1997-06-10)

## Description

L'invention concerné, de façon générale, à la fois le secteur automobile et les techniques de régulation.

Plus précisément, l'invention concerne un procédé de gestion de ressources énergétiques pour un véhicule hybride série mû par un moteur électrique alimenté par une réserve d'énergie électrique et comprenant en outre un groupe électrogène incluant lui-même au moins un alternateur, un moteur thermique, et une réserve de carburant, le moteur thermique fournissant en fonctionnement une puissance régulée dans un sens croissant ou décroissant au moyen d'une consigne de position d'un papillon sollicité dans un sens correspondant d'ouverture ou de fermeture, et l'alternateur fournissant une puissance électrique puisée sur celle du moteur thermique et régulée dans un sens croissant ou décroissant au moyen d'une consigne d'excitation croissante ou décroissante de cet alternateur, ce procédé comprenant en outre une opération de mise en marche sélective du moteur thermique, ce moteur étant par défaut à l'arrêt et mis en marche de façon non permanente pour prolonger l'autonomie dont dispose le véhicule par la charge électrique de la réserve d'énergie électrique.

Un tel procédé est connu de l'homme du métier par le brevet US-A-6 137 250, un prodécé voisin étant par ailleurs décrit dans le document de brevet EP-A-1 127 734.

Bien que le concept connu de véhicule hybride ait été développé dans la perspective d'un respect plus rigoureux de l'environnement, et ouvre effectivement la possibilité d'atteindre un tel résultat, la conception des véhicules de ce type reste néanmoins sujette elle-même à des compromis pratiques dont dépend la qualité du résultat recherché.

L'invention, qui se situe dans ce contexte, a ainsi pour but de proposer un procédé de gestion de ressources énergétiques pour un véhicule hybride série visant à optimiser le respect de l'environnement.

A cette fin, le procédé de l'invention, par ailleurs conforme à la définition générique qu'en donne le préambule ci-dessus, est essentiellement caractérisé en ce qu'il comprend une double opération d'asservissement, mise en oeuvre pendant le fonctionnement du moteur thermique, et consistant au moins à réguler la consigne d'excitation de l'alternateur en fonction au moins d'une première différence formée en soustrayant un régime mesuré du moteur thermique d'une consigne de régime moteur, et à réguler la consigne de position du papillon en fonction au moins d'une seconde différence formée en soustrayant le régime mesuré du moteur thermique de la somme de la consigne de régime moteur et d'un signal de surrégime, en ce que la consigne d'excitation de l'alternateur décroît lorsque la première différence croît, en ce que la consigne de position du papillon évolue dans le sens d'une ouverture du papillon croissant avec la seconde différence, et en ce que le signal de surrégime est toujours positif ou nul, ce dont il résulte que la puissance fournie par le moteur thermique tend vers un maximum pour chaque régime adopté par ce moteur.

Ce procédé comprend par ailleurs diverses mesures grâce auxquelles la puissance fournie par le moteur thermique tend vers un maximum pour chaque régime adopté par ce moteur, ce dernier fonctionnant ainsi dans des conditions optimales en termes de rendement et de respect de l'environnement.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma fonctionnel d'un véhicule hybride auquel s'applique le procédé de l'invention ;
- la figure 2 est un diagramme illustrant les différentes étapes opératoires du procédé;
- la figure 3 est un diagramme illustrant trois lois différentes liant la consigne de régime moteur à la vitesse du véhicule en fonction de trois charges différentes de la réserve d'énergie électrique ; et
- la figure 4 est un diagramme illustrant un gabarit liant le signal de surrégime à la composante basse fréquence de la consigne d'excitation de l'alternateur.

Comme mentionné précédemment, l'invention concerne un procédé permettant de gérer efficacement les ressources énergétiques d'un véhicule hybride série.

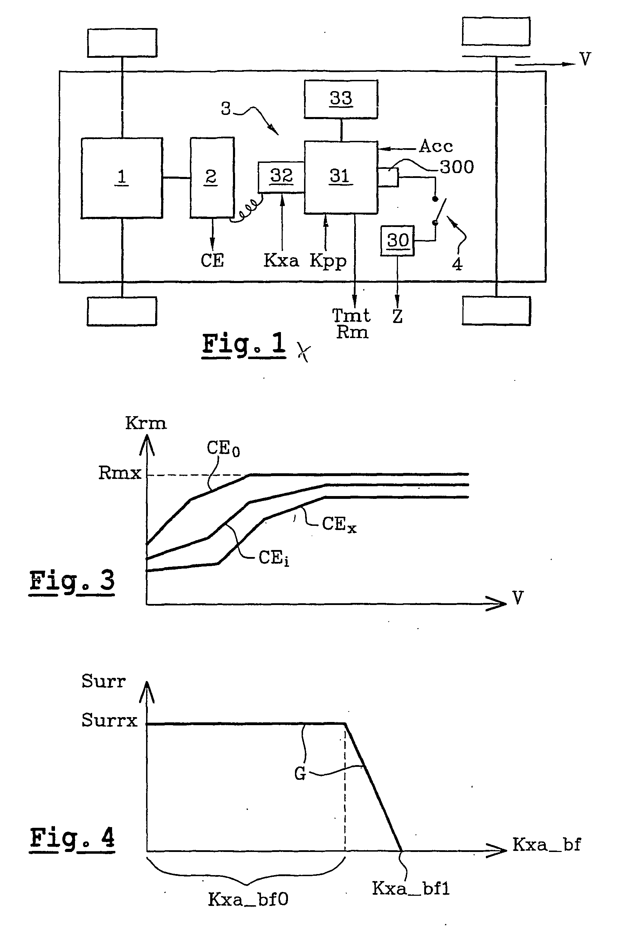

Un tel véhicule (figure 1) est normalement mû par un moteur électrique 1 alimenté par une réserve d'énergie électrique 2 constituée par un ensemble de batteries, mais comprend également un groupe électrogène 3 relié à cette réserve pour pouvoir la recharger.

Ce groupe électrogène 3 inclut lui-même un ou plusieurs alternateurs 32, un moteur thermique 31, et une réserve de carburant 33 propre à alimenter le moteur thermique.

Ce moteur 31 fournit en fonctionnement une puissance mécanique qui peut être régulée, dans un sens croissant ou décroissant, au moyen d'une consigne Kpp de position de papillon par laquelle un papillon d'admission est sollicité dans un sens correspondant d'ouverture ou de fermeture.

La position réelle de ce papillon, qui sera ci-après notée "α", peut être connue à tout instant, et peut éventuellement se confondre avec la consigne de position de papillon.

Dans la mesure où il est entraîné par le moteur thermique 31, l'alternateur 32 fournit une puissance électrique qui est puisée sur celle du moteur thermique.

Le couple résistant pour une vitesse donnée de l'alternateur, donc la puissance électrique délivrée par l'alternateur 32 peuvent être régulés, dans un sens croissant ou décroissant, au moyen d'une consigne Kxa d'excitation croissante ou décroissante de cet alternateur 32.

Selon un premier de ses aspects, le procédé de l'invention comprend une opération de mise en marche sélective du moteur thermique 31.

Plus précisément, ce moteur 31 est à l'arrêt par défaut, et n'est mis en marche, de façon non permanente, que pour prolonger l'autonomie dont dispose le véhicule sous la forme de la charge électrique CE de la réserve d'énergie électrique 2.

Il est possible de prévoir que le contact électrique 4 reliant le démarreur 300 à la batterie de servitude 30, et dont la fermeture provoque le démarrage du moteur thermique, soit commandé de façon automatique, ou qu'il soit plus simplement commandé par le conducteur du véhicule.

Selon un autre aspect de l'invention, la puissance électrique fournie par l'alternateur 32 est de préférence régulée par variation d'un courant d'excitation qui lui est fourni et qui représente donc la consigne Kxa d'excitation de cet alternateur 32, l'augmentation de ce courant d'excitation conduisant à une augmentation de la puissance électrique fournie par l'alternateur.

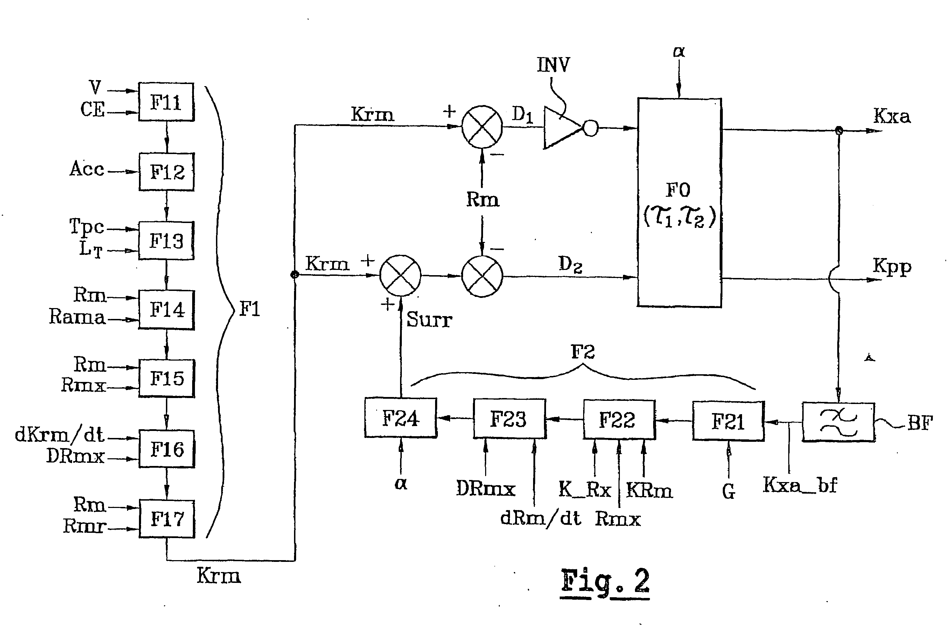

La figure 2 illustre les étapes opératoires permettant l'élaboration des consignes Kxa et Kpp.

Ces deux consignes sont élaborées par une double opération d'asservissement, qui est mise en oeuvre pendant le fonctionnement du moteur thermique 31, et qui comprend plus précisément deux boucles d'asservissement, du type PID, s'influençant réciproquement dans un bloc fonctionnel de régulation F0.

Comme le sait bien l'homme de métier, l'appellation PID ou "proportionnelle intégrale dérivée" se dit d'une fonction de commande produisant, en tant que signal de sortie, un signal proportionnel à une combinaison linéaire d'un signal d'entrée, de son intégrale dans le temps, et de sa vitesse de variation.

L'une des boucles, qui produit la consigne Kpp de position de papillon en sortie du bloc de régulation F0, se referme à l'entrée de ce bloc principalement sous la forme au moins d'un signal de vitesse V du véhicule et sous la forme d'un signal de régime moteur Rm, ces signaux étant tous deux fonctionnellement dépendants de la position α du papillon.

L'autre boucle, qui produit la consigne Kxa d'excitation de l'alternateur en sortie du bloc de régulation F0, se referme à l'entrée de ce bloc principalement sous la forme au moins du signal de vitesse V du véhicule et sous la forme d'un signal de surrégime Surr, qui dépend d'une composante basse fréquence Kxa_bf de la consigne Kxa par l'intermédiaire de la loi illustrée à la figure 4.

Globalement, la consigne Kxa d'excitation de l'alternateur 32 est régulée en fonction d'une différence D1 formée en soustrayant un signal de régime mesuré du moteur thermique Rm d'un signal de consigne Krm de régime moteur, la consigne Kxa d'excitation de l'alternateur étant, grâce à un inverseur INV, conduite à décroître lorsque la différence D1 croît.

D'autre part, la consigne Kpp de position du papillon est régulée en fonction d'une différence D2 formée en soustrayant le régime mesuré du moteur thermique Rm de la somme de la consigne Krm de régime moteur et du signal de surrégime Surr, la consigne Kpp de position du papillon évoluant dans le sens d'une ouverture du papillon qui croît avec la différence D2.

Or, cette régulation est mise en oeuvre de façon telle que le signal de surrégime Surr soit toujours positif ou nul.

Dans ces conditions, la consigne Kpp de position de papillon est systématiquement biaisée vers l'ouverture, de sorte que la puissance fournie par le moteur thermique 31 tend vers un maximum pour chaque régime adopté par ce moteur.

En d'autres termes, la consigne de régime moteur Krm est décalée vers le haut par le signal de surrégime Surr, par exemple de 100 tours/minute, tant que l'alternateur 32 est assez puissant pour freiner le moteur thermique 31, ce qui optimise le fonctionnement de ce moteur en termes de rendement et de respect de l'environnement.

Plus précisément, la consigne Krm de régime moteur résulte de l'application d'une fonction F1 formée par un ensemble hiérarchisé de sous-fonctions F11 à F17, qui sont toutes optionnelles à l'exception de la première sous-fonction F11.

Chacune des sous-fonctions F12 à F17 a donc pour effet de modifier, pour autant qu'elle soit prévue, un régime défini par défaut par la ou les sous-fonctions précédentes.

La fonction F1, sous la forme de sa première sous-fonction F11, lie tout d'abord la consigne Krm de régime moteur à la vitesse V du véhicule et à la charge électrique CE de la réserve d'énergie électrique, comme illustré à la figure 3.

Comme le montre cette figure, la consigne Krm de régime moteur croît globalement avec la vitesse V du véhicule et est d'autant plus élevée que la charge CE de la réserve d'énergie électrique 2 est basse.

Ainsi, pour une vitesse V donnée du véhicule, la consigne Krm de régime moteur prend une valeur relativement basse dans le cas où la charge CE de la réserve d'énergie électrique 2 prend sa valeur maximum CEx, une valeur relativement haute dans le cas où la charge CE de la réserve d'énergie électrique 2 prend sa valeur minimum CEo, et une valeur intermédiaire dans le cas où la charge CE de la réserve d'énergie électrique 2 prend une valeur CEi intermédiaire entre ses valeurs maximum CEx et minimum CEo.

Par ailleurs, quelle que soit la valeur de la charge CE, la consigne Krm de régime moteur croît avec la vitesse V du véhicule, au moins jusqu'à un palier de saturation qui ne peut dépasser le régime maximum Rmx du moteur 31.

La fonction F1, par sa deuxième sous-fonction F12, lie ensuite la consigne Krm de régime moteur à une demande Acc de puissance, cette demande de puissance prenant par exemple la forme d'un signal représentatif de la position d'une pédale d'accélération.

Cette relation est définie de façon telle que la consigne Krm de régime moteur croît avec la demande Acc de puissance à vitesse V constante du véhicule, de sorte que la sensation de conduite du véhicule hybride se rapproche de la sensation de conduite d'un véhicule mû par un moteur thermique.

La fonction F1, par sa troisième sous-fonction F13, lie encore la consigne Krm de régime moteur à la température Tpc du pot d'échappement catalytique équipant le moteur thermique 31.

Dans la mesure où un pot d'échappement catalytique ne fonctionne de façon efficace que sous réserve d'être porté à une température supérieure à un seuil limite L_{T} de fonctionnement, et où un régime moteur trop bas peut conduire à un refroidissement du pot d'échappement catalytique, il est en effet utile de prévoir que la consigne Krm de régime moteur subisse une augmentation lorsque la température Tpc du pot catalytique descend au-dessous du seuil limite de fonctionnement L_{T}.

Il est ainsi possible, par exemple, de donner au régime de ralenti du moteur une valeur de 1800 tours/minute lorsque le pot catalytique est froid, au lieu de 1200 tours/minute lorsque ce pot est chaud.

La fonction F1, par sa quatrième sous-fonction F14, lie encore la consigne Krm de régime moteur à un régime d'amorçage Rama de l'alternateur 32.

L'alternateur 32 présente en effet un régime, dit "régime d'amorçage", au-dessous duquel la force électromotrice qu'il produit est inférieure à la force électromotrice de la réserve d'énergie électrique 2 elle-même.

La sous-fonction F14 choisit la consigne Krm de régime moteur de telle manière que le régime Rm du moteur thermique se maintienne au-dessus du régime d'amorçage Rama de l'alternateur, faute de quoi le moteur thermique 31 est placé dans son mode de fonctionnement ralenti.

La fonction F1, par sa cinquième sous-fonction F15, lie encore la consigne Krm de régime moteur à un régime moteur maximum Rmx dépendant de la température Tmt du moteur thermique 31.

Pour éviter l'apparition dans le moteur thermique 31 de forts gradients de température générateurs d'usure prématurée et de pollution, il est en effet important que ce moteur puisse monter progressivement en température en adoptant un régime maximum adapté à cette température, selon une loi connue des motoristes.

La sous-fonction F15 choisit ainsi la consigne Krm de régime moteur de telle manière que le régime Rm du moteur thermique soit maintenu en dessous du régime maximum Rmx.

La fonction F1, par sa sixième sous-fonction F16, lie encore la consigne Krm de régime moteur à un seuil maximum DRmx de variations positives de régime moteur Rm, c'est-à-dire dans le sens d'une accélération.

La sous-fonction F16 permet d'éviter les à-coups d'accélération trop violents, générateurs d'une baisse de rendement du moteur et de pollution.

Pour ce faire, la sous-fonction F16 limite la dérivée temporelle dKrm/dt de la consigne Krm de régime moteur à une valeur permettant de maintenir les variations dRm/dt de signe positif du régime moteur Rm en dessous du seuil maximum DRmx de variations positives.

La fonction F1, par sa septième sous-fonction F17, lie encore la consigne Krm de régime moteur à une ou plusieurs plages Rmr de régimes moteur résonnants, la consigne Krm de régime moteur étant pilotée pour placer le régime moteur Rm en dehors de chaque plage Rmr de régimes moteur résonnants.

Ainsi, dès que le régime moteur Rm aborde une plage Rmr de régime moteur résonnant, la valeur de la consigne de régime moteur Krm telle que produite par la sous-fonction F17 est figée jusqu'à ce que cette consigne atteigne une valeur permettant de dépasser la plage Rmr concernée, la valeur de la consigne de régime moteur Krm produite par la sous-fonction F17 subissant alors le saut permettant au régime moteur Rm de traverser la plage Rmr très rapidement.

Le signal de surrégime Surr résulte quant à lui de l'application d'une fonction F2 formée par un ensemble hiérarchisé de sous-fonctions F21 à F24, qui sont toutes optionnelles à l'exception de la première sous-fonction F21.

Chacune des sous-fonctions F22 à F24 a donc pour effet de modifier, pour autant qu'elle soit prévue, un régime défini par défaut par la ou les sous-fonctions précédentes.

La fonction F2, sous la forme de sa première sous-fonction F21, lie tout d'abord le signal de surrégime Surr à une composante basse fréquence Kxa_bf de la consigne Kxa d'excitation de l'alternateur par un gabarit G illustré à la figure 4, la composante Kxa_bf étant délivrée par un filtre passe-bas BF recevant la consigne Kxa.

Comme le montre cette figure, le signal de surrégime Surr évolue entre une valeur maximale Surrx, qu'il adopte par défaut pour une plage Kxa_bf0 de valeurs relativement basses de la composante basse fréquence Kxa_bf de la consigne Kxa d'excitation de l'alternateur, et une valeur nulle, qu'il adopte par défaut pour une valeur relativement haute Kxa_bf1 de la composante basse fréquence Kxa_bf de la consigne Kxa d'excitation de l'alternateur.

Par exemple, la borne supérieure de la plage Kxa_bf0 correspond à un courant d'excitation de l'ordre de 80% du courant d'excitation maximum de l'alternateur 32, tandis que la valeur haute Kxa_bf1 correspond à un courant d'excitation de l'ordre de 98% du courant d'excitation maximum de cet alternateur.

Pour les valeurs de la composante basse fréquence Kxa_bf intermédiaires entre la borne supérieure de la plage basse Kxa_bf0 et la valeur relativement haute Kxa_bf1 de cette composante 32, le signal de surrégime Surr est par exemple interpolé linéairement entre ses valeurs extrêmes Surrx et 0.

La fonction F2, par sa deuxième sous-fonction F22, lie par ailleurs le signal de surrégime Surr à la consigne Krm de régime moteur et à un régime moteur maximum Rmx, de manière à éviter que le régime moteur Rm ne dépasse le régime moteur maximum Rmx.

Pour ce faire, l'écart Rmx-Krm entre la consigne Krm de régime moteur et le régime moteur maximum Rmx est surveillé, et le signal de surrégime Surr est réduit lorsque l'écart Rmx-Krm devient inférieur à un écart prédéterminé K_Rx.

La fonction F2, par sa troisième sous-fonction F23, lie encore le signal de surrégime Surr à un seuil maximum DRmx de variations positives de régime moteur Rm, c'est-à-dire des variations représentées par la dérivée temporelle dRm/dt de signe positif du régime moteur.

Cette troisième sous-fonction a plus précisément pour effet de réduire le signal de surrégime Surr de manière à maintenir les variations positives du régime moteur Rm en dessous du seuil maximum DRmx de variations positives, le régime moteur étant en revanche autorisé à décroître de façon aussi rapide que possible.

La fonction F2, par sa quatrième sous-fonction F24, lie enfin le signal de surrégime Surr à la position α du papillon, le signal de surrégime Surr adoptant une valeur nulle lorsque le papillon est totalement ouvert ou lorsque le moteur doit être maintenu au ralenti.

Le bloc de régulation F0 met en oeuvre deux ensembles de paramètres pour l'élaboration de la consigne de position de papillon Kpp, et grâce auxquels la consigne Kpp est autorisée à évoluer plus vite dans le sens de la fermeture, c'est-à-dire dans la sens de la baisse du régime moteur, que dans le sens de l'ouverture.

En d'autres termes, la consigne Kpp de position du papillon est régulée avec une première constante de temps τ₁ dans le sens d'une ouverture croissante du papillon, et avec une seconde constante de temps τ₂ dans le sens d'une ouverture décroissante du papillon, la première constante de temps τ₁ étant supérieure à la seconde constante de temps τ₂.

Pour éviter une surproduction d'énergie et offrir au véhicule la possibilité de freiner, notamment en descente, tout en récupérant de l'énergie électrique, le procédé de l'invention comprend avantageusement une opération qui consiste à surveiller la production de puissance électrique par le moteur électrique 1 au moins, et une opération qui consiste à placer sélectivement le moteur thermique 31 dans son mode de fonctionnement ralenti lorsque le moteur électrique 1 produit une puissance électrique par transformation d'une énergie cinétique ou potentielle du véhicule.

La production d'énergie électrique par le moteur électrique 1 fonctionnant alors en générateur remplace ainsi l'apport d'énergie électrique de l'alternateur 32, et permet de réguler la vitesse du véhicule par l'effet dit de "frein moteur".

Dans la mesure où le démarrage du moteur thermique requiert, de la part de la batterie de servitude 30, la nécessité d'alimenter le démarreur 300, et donc la production d'un courant qui peut s'accompagner d'une chute de tension aux bornes de cette batterie, le procédé de l'invention peut comporter des mesures permettant d'interdire le démarrage du moteur thermique si la chute de tension aux bornes de la batterie de servitude risque de mettre en péril la fonctionnalité d'organes électroniques qu'elle alimente.

Pour ce faire, le procédé de l'invention peut ainsi comprendre une opération consistant à surveiller l'impédance Z de la batterie de démarrage 30 du moteur thermique 31, et à inhiber la mise en marche du moteur thermique 31 lorsque cette impédance Z dépasse une limite prédéterminée Zx, au moins lorsque le véhicule n'est pas à l'arrêt.

## Revendications

1. Procédé de gestion de ressources énergétiques pour un véhicule hybride série mû par un moteur électrique (1) alimenté par une réserve d'énergie électrique (2) et comprenant en outre un groupe électrogène (3) incluant lui-même au moins un alternateur (32), un moteur thermique (31), et une réserve de carburant (33), le moteur thermique (31) fournissant en fonctionnement une puissance régulée dans un sens croissant ou décroissant au moyen d'une consigne (Kpp) de position d'un papillon sollicité dans un sens correspondant d'ouverture ou de fermeture, et l'alternateur (32) fournissant une puissance électrique puisée sur celle du moteur thermique (31) et régulée dans un sens croissant ou décroissant au moyen d'une consigne (Kxa) d'excitation croissante ou décroissante de cet alternateur (32), ce procédé comprenant en outre une opération de mise en marche sélective du moteur thermique (31), ce moteur étant par défaut à l'arrêt et mis en marche de façon non permanente pour prolonger l'autonomie dont dispose le véhicule par la charge électrique (CE) de la réserve d'énergie électrique (2), **caractérisé en ce qu'**il comprend une double opération d'asservissement, mise en oeuvre pendant le fonctionnement du moteur thermique, et consistant au moins à réguler la consigne (Kxa) d'excitation de l'alternateur (32) en fonction au moins d'une première différence (D1) formée en soustrayant un régime mesuré du moteur thermique (Rm) d'une consigne (Krm) de régime moteur, et à réguler la consigne (Kpp) de position du papillon en fonction au moins d'une seconde différence (D2) formée en soustrayant le régime mesuré du moteur thermique (Rm) de la somme de la consigne (Krm) de régime moteur et d'un signal de surrégime (Surr), **en ce que** la consigne (Kxa) d'excitation de l'alternateur décroît lorsque la première différence (D1) croît, **en ce que** la consigne (Kpp) de position du papillon évolue dans le sens d'une ouverture du papillon croissant avec la seconde différence (D2), et **en ce que** le signal de surrégime (Surr) est toujours positif ou nul, ce dont il résulte que la puissance fournie par le moteur thermique (31) tend vers un maximum pour chaque régime adopté par ce moteur.

2. Procédé suivant la revendication 1, **caractérisé en ce que** la puissance électrique fournie par l'alternateur (32) est régulée dans un sens croissant ou décroissant par variation, dans un sens croissant ou décroissant correspondant, d'un courant d'excitation fourni à cet alternateur (32).

3. Procédé suivant la revendication 1 ou 2, **caractérisé en ce que** la consigne (Krm) de régime moteur est liée par une première fonction (F1) à la vitesse (V) du véhicule et à la charge (CE) de la réserve d'énergie électrique, la consigne (Krm) de régime moteur croissant globalement avec la vitesse (V) du véhicule et étant d'autant plus élevée que la charge (CE) de la réserve d'énergie électrique est basse.

4. Procédé suivant la revendication 3, **caractérisé en ce que** la consigne de régime moteur est en outre liée par la première fonction (F1) à une demande (Acc) de puissance, telle que qu'une demande de puissance définie par une position d'une pédale d'accélération, la consigne (Krm) de régime moteur croissant globalement avec la demande (Acc) de puissance à vitesse (V) constante du véhicule.

5. Procédé suivant l'une quelconque des revendications 3 et 4, **caractérisé en ce que** la consigne (Krm) de régime moteur est en outre liée par la première fonction (F1) à une température (Tpc) d'un pot d'échappement catalytique du moteur thermique (31), la consigne (Krm) de régime moteur étant augmentée lorsque la température (Tpc) du pot catalytique descend au-dessous d'un seuil limite (L_{T}) de fonctionnement.

6. Procédé suivant l'une quelconque des revendications 3 à 5, **caractérisé en ce que** la consigne (Krm) de régime moteur est en outre liée par la première fonction (F1) à un régime d'amorçage (Rama) de l'alternateur (32), la consigne (Krm) de régime moteur étant choisie pour maintenir le régime (Rm) du moteur thermique au-dessus du régime d'amorçage (Rama) de l'alternateur, ou pour placer le moteur thermique (31) dans un mode de fonctionnement ralenti.

7. Procédé suivant l'une quelconque des revendications 3 à 6, **caractérisé en ce que** la consigne (Krm) de régime moteur est en outre liée par la première fonction (F1) à un régime moteur maximum (Rmx) dépendant de la température (Tmt) du moteur thermique (31), la consigne (Krm) de régime moteur étant choisie pour maintenir le régime (Rm) du moteur thermique en dessous du régime maximum (Rmx).

8. Procédé suivant l'une quelconque des revendications 3 à 7, **caractérisé en ce que** la consigne (Krm) de régime moteur est en outre liée par la première fonction (F1) à un seuil maximum (DRmx) de variations positives de régime moteur (Rm), la dérivée temporelle (dKrm/dt) de la consigne (Krm) de régime moteur étant limitée pour maintenir les variations positives du régime moteur (Rm) en dessous du seuil maximum (DRmx) de variations positives.

9. Procédé suivant l'une quelconque des revendications 3 à 8, **caractérisé en ce que** la consigne (Krm) de régime moteur est en outre liée par la première fonction (F1) à au moins une plage (Rmr) de régimes moteur résonnants, la consigne (Krm) de régime moteur étant pilotée pour placer le régime moteur (Rm) en dehors de chaque plage (Rmr) de régimes moteur résonnants.

10. Procédé suivant l'une quelconque des revendications précédentes, **caractérisé en ce que** le signal de surrégime (Surr) est lié par une seconde fonction (F2) à une composante basse fréquence (Kxa_bf) de la consigne (Kxa) d'excitation de l'alternateur, le signal de surrégime (Surr) évoluant entre une valeur maximale (Surrx), qu'il adopte par défaut pour une plage (Kxa_bf0) de valeurs relativement basses de la composante basse fréquence (Kxa_bf) de la consigne (Kxa) d'excitation de l'alternateur, et une valeur nulle, qu'il adopte par défaut pour une valeur relativement haute (Kxa_bf1) de la composante basse fréquence (Kxa_bf) de la consigne (Kxa) d'excitation de l'alternateur, en passant par des valeurs intermédiaires qu'il adopte par défaut pour des valeurs de la composante basse fréquence (Kxa_bf) de la consigne (Kxa) d'excitation de l'alternateur, intermédiaires entre la plage (Kxa_bf0) de valeurs relativement basses et la valeur relativement haute (Kxa_bf1) de cette composante.

11. Procédé suivant la revendication 10, **caractérisé en ce que** le signal de surrégime (Surr) est en outre lié par la seconde fonction (F2) à la consigne (Krm) de régime moteur et à un régime moteur maximum (Rmx), le signal de surrégime (Surr) étant réduit lorsque l'écart (Rmx-Krm) entre la consigne (Krm) de régime moteur et le régime moteur maximum (Rmx) est inférieur à un écart prédéterminé (K_Rx).

12. Procédé suivant l'une quelconque des revendications 10 et 11, **caractérisé en ce que** le signal de surrégime (Surr) est en outre lié par la seconde fonction (F2) à un seuil maximum (DRmx) de variations positives (dRm/dt) de régime moteur (Rm), le signal de surrégime (Surr) étant limité pour maintenir les variations positives du régime moteur (Rm) en dessous du seuil maximum (DRmx) de variations positives.

13. Procédé suivant l'une quelconque des revendications 10 à 12, **caractérisé en ce que** le signal de surrégime (Surr) est en outre lié par la seconde fonction (F2) à la position (α) du papillon, le signal de surrégime (Surr) adoptant une valeur nulle lorsque le papillon est totalement ouvert.

14. Procédé suivant l'une quelconque des revendications précédentes, **caractérisé en ce que** la consigne (Kpp) de position du papillon est régulée avec une première constante de temps (τ₁) dans le sens d'une ouverture croissante du papillon et avec une seconde constante de temps (τ₂) dans le sens d'une ouverture décroissante du papillon, et **en ce que** la première constante de temps (τ₁) est supérieure à la seconde (τ₂).

15. Procédé suivant l'une quelconque des revendications précédentes, **caractérisé en ce qu'**il comprend une opération consistant à surveiller la production de puissance électrique par le moteur électrique (1) au moins, et une opération consistant à placer sélectivement le moteur thermique (31) dans un mode de fonctionnement ralenti lorsque le moteur électrique (1) produit une puissance électrique par transformation d'une énergie cinétique ou potentielle du véhicule.

16. Procédé suivant l'une quelconque des revendications précédentes, **caractérisé en ce qu'**il comprend une opération consistant à surveiller l'impédance (Z) d'une batterie de démarrage (30) du moteur thermique (31), et à inhiber la mise en marche du moteur thermique (31) lorsque l'impédance (Z) dépasse une limite prédéterminée (Zx), au moins lorsque le véhicule n'est pas à l'arrêt.

## Claims

1. Power resource management method for a mass production hybrid vehicle propelled by an electric motor (1) supplied by a reserve of electric power (2) and also comprising an electric generating set (3) itself including at least one alternator (32), a heat engine (31), and a fuel reserve (33), the heat engine (31) in operation supplying a power regulated in an increasing or decreasing direction by means of a position setpoint (Kpp) of a butterfly valve operated in one direction corresponding to opening or closing, and the alternator (32) supplying an electric power drawn from that of the heat engine (31) and regulated in an increasing or decreasing direction by means of a setpoint (Kxa) for the increasing or decreasing excitation of this alternator (32), this method also comprising an operation for the selective starting of the heat engine (31), this engine being stopped by default and started in a non-permanent manner in order to extend the autonomy the vehicle has through the electric charge (CE) of the reserve of electric energy (2), **characterized in that** it comprises a double operation of control, applied during the operation of the heat engine, and consisting at least in regulating the setpoint (Kxa) of excitation of the alternator (32) according to at least a first difference (D1) formed by subtracting a measured speed of the heat engine (Rm) from an engine speed setpoint (Krm), and in regulating the setpoint (Kpp) of position of the butterfly valve according to at least a second difference (D2) formed by subtracting the measured speed of the heat engine (Rm) from the sum of the engine speed setpoint (Krm) and an overspeed signal (Surr), **in that** the excitation setpoint (Kxa) of the alternator decreases when the first difference (D1) increases, **in that** the setpoint (Kpp) of position of the butterfly valve changes in the direction of an opening of the butterfly valve increasing with the second difference (D2), and **in that** the overspeed signal (Surr) is always positive or zero, from which it results that the power supplied by the heat engine (31) tends towards a maximum for each speed adopted by this engine.

2. Method according to Claim 1, **characterized in that** the electric power supplied by the alternator (32) is regulated in an increasing or decreasing direction by variation, in a corresponding increasing or decreasing direction, of an excitation current supplied by this alternator (32).

3. Method according to Claim 1 or 2, **characterized in that** the engine speed setpoint (Krm) is linked by a first function (F1) to the speed (V) of the vehicle and to the charge (CE) of the electric power reserve, the engine speed setpoint (Krm) increasing generally with the speed (V) of the vehicle and increasing as the charge (CE) of the electric power reserve decreases.

4. Method according to Claim 3, **characterized in that** the engine speed setpoint is also linked by the first function (F1) to a power request (Acc), such as a power request defined by a position of an accelerator pedal, the engine speed setpoint (Krm) increasing generally with the power request (Acc) at a constant speed (V) of the vehicle.

5. Method according to either one of Claims 3 or 4, **characterized in that** the engine speed setpoint (Krm) is also linked by the first function (F1) to a temperature (Tpc) of a catalytic silencer of the heat engine (31), the engine speed setpoint (Krm) being increased when the temperature (Tpc) of the catalytic silencer descends below a limit threshold (L_{T}) of operation.

6. Method according to any one of Claims 3 to 5, **characterized in that** the engine speed setpoint (Krm) is also linked by the first function (F1) to a starting speed (Rama) of the alternator (32), the engine speed setpoint (Krm) being chosen to maintain the speed (Rm) of the heat engine above the starting speed (Rama) of the alternator, or in order to place the heat engine (31) in an idling operating mode.

7. Method according to any one of Claims 3 to 6, **characterized in that** the engine speed setpoint (Krm) is also linked by the first function (F1) to a maximum engine speed (Rmx) dependent on the temperature (Tmt) of the heat engine (31), the engine speed setpoint (Krm) being chosen in order to keep the speed (Rm) of the heat engine below the maximum speed (Rmx).

8. Method according to any one of Claims 3 to 7, **characterized in that** the engine speed setpoint (Krm) is also linked by the first function (F1) to a maximum threshold (DRmx) of positive variations of engine speed (Rm), the time differential (dKrm/dt) of the engine speed setpoint (Krm) being limited to keep the positive variations of the engine speed (Rm) below the maximum threshold (DRmx) of positive variations.

9. Method according to any one of Claims 3 to 8, **characterized in that** the engine speed setpoint (Krm) is also linked by the first function (F1) to at least one range (Rmr) of resonant engine speeds, the engine speed setpoint (Krm) being controlled to place the engine speed (Rm) outside each range (Rmr) of resonant engine speeds.

10. Method according to any one of the preceding claims, **characterized in that** the overspeed signal (Surr) is linked by a second function (F2) to a low-frequency component (Kxa_bf) of the setpoint (Kxa) of excitation of the alternator, the overspeed signal (Surr) changing between a maximum value (Surrx), which it adopts by default for a range (Kxa_bf0) of relatively low values of the low frequency component (Kxa_bf) of the setpoint (Kxa) of excitation of the alternator, and a value zero which it adopts by default for a relatively high value (Kxa_bf1) of the low-frequency component (Kxa_bf) of the setpoint (Kxa) of excitation of the alternator, passing through intermediate values that it adopts by default for values of the low-frequency component (Kxa_bf) of the setpoint (Kxa) of excitation of the alternator, values that are intermediate between the range (Kxa_bf0) of relatively low values and the relatively high value (Kxa_bf1) of this component.

11. Method according to Claim 10, **characterized in that** the overspeed signal (Surr) is also linked by the second function (F2) to the engine speed setpoint (Krm) and to a maximum engine speed (Rmx), the overspeed signal (Surr) being reduced when the difference (Rmx-Krm) between the engine speed setpoint (Krm) and the maximum engine speed (Rmx) is less than a predetermined difference (K_Rx).

12. Method according to either one of Claims 10 or 11, **characterized in that** the overspeed signal (Surr) is also linked by the second function (F2) to a maximum threshold (DRmx) of positive variations (dRm/dt) of engine speed (Rm), the overspeed signal (Surr) being limited to keep the positive variations of the engine speed (Rm) below the maximum threshold (DRmx) of positive variations.

13. The method according to any one of Claims 10 to 12, **characterized in that** the overspeed signal (Surr) is also linked by the second function (F2) to the position (α) of the butterfly valve, the overspeed signal (Surr) adopting a zero value when the butterfly valve is fully open.

14. Method according to any one of the preceding claims, **characterized in that** the setpoint (Kpp) of position of the butterfly valve is regulated with a first time constant (τ₁) in the direction of an increasing opening of the butterfly valve and with a second time constant (τ₂) in the direction of a decreasing opening of the butterfly valve, and **in that** the first time constant (τ₁) is greater than the second (τ₂).

15. Method according to any one of the preceding claims, **characterized in that** it comprises an operation consisting in supervising the production of electric power by the electric motor (1) at least, and an operation consisting in selectively placing the heat engine (31) in an idling operating mode when the electric motor (1) produces an electric power by converting a kinetic or potential energy of the vehicle.

16. Method according to any one of the preceding claims, **characterized in that** it comprises an operation consisting in supervising the impedance (Z) of a battery (30) for starting the heat engine (31), and in inhibiting the starting of the heat engine (31) when the impedance (Z) exceeds a predetermined limit (Zx), at least when the vehicle is not stationary.

## Patentansprüche

1. Verfahren zur Verwaltung von Energieressourcen für ein Serienhybridfahrzeug, das mit einem Elektromotor (1) betrieben wird, der von einer elektrischen Energiereserve (2) gespeist wird, ferner umfassend eine elektromotorische Gruppe (3), die selbst mindestens einen Wechselstromgenerator (32), einen Verbrennungsmotor (31) und eine Treibstoffreserve (33) aufweist, wobei der Verbrennungsmotor (31) während des Betriebs eine geregelte Leistung in eine zunehmende oder abnehmende Richtung mittels eines Positionssollwerts (Kpp) einer Drosselklappe, die in eine Richtung entsprechend einem Öffnen oder Schließen belastet wird, liefert, und wobei der Wechselstromgenerator (32) eine an jener des Verbrennungsmotors (31) abgezapfte elektrische Leistung liefert, die in eine zunehmende oder abnehmende Richtung mittels eines zunehmenden oder abnehmenden Erregungssollwerts (Kxa) dieses Wechselstromgenerators (32) geregelt wird, wobei dieses Verfahren ferner einen Schritt der selektiven Inbetriebnahme des Verbrennungsmotors (31) umfasst, wobei dieser Motor bei Nichtverwendung abgeschaltet ist und nicht ständig in Betrieb genommen wird, um die Autonomie zu verlängern, über die das Fahrzeug durch die elektrische Aufladung (CE) der elektrischen Energiereserve (2) verfügt, **dadurch gekennzeichnet, dass** es einen doppelten Steuerungsschritt umfasst, der während des Betriebs des Verbrennungsmotors eingesetzt wird und darin besteht, mindestens den Erregungssollwert (Kxa) des Wechselstromgenerators (32) in Abhängigkeit von mindestens einer ersten Differenz (D1) zu regeln, die durch Subtraktion einer gemessenen Drehzahl des Verbrennungsmotors (Rm) von einem Drehzahlsollwert (Krm) des Motors gebildet wird, und den Positionssollwert (Kpp) der Drosselklappe in Abhängigkeit von mindestens einer zweiten Differenz (D2) zu regeln, die durch Subtraktion der gemessenen Drehzahl des Verbrennungsmotors (Rm) von der Summe des Drehzahlsollwerts (Krm) des Motors und eines Überdrehzahlsignals (Surr) gebildet wird, dass der Erregungssollwert (Kxa) des Wechselstromgenerators abnimmt, wenn die erste Differenz (D1) zunimmt, dass sich der Positionssollwert (Kpp) der Drosselklappe in Richtung eines Öffnens der Drosselklappe zunehmend mit der zweiten Differenz (D2) entwickelt, und dass das Überdrehzahlsignal (Surr) immer positiv oder gleich null ist, woraus sich ergibt, dass die vom Verbrennungsmotor (31) gelieferte Leistung zu einem Maximum für jede von diesem Motor angenommene Drehzahl neigt.

2. Verfahren nach Anspruch 1, **dadurch gekennzeichnet, dass** die vom Wechselstromgenerator (32) gelieferte elektrische Leistung in eine zunehmende oder abnehmende Richtung durch Variation eines an diesen Wechselstromgenerator (32) gelieferten Erregungsstroms in eine zunehmende oder abnehmende Richtung geregelt wird.

3. Verfahren nach Anspruch 1 oder 2, **dadurch gekennzeichnet, dass** der Motordrehzahlsollwert (Krm) durch eine erste Funktion (F1) mit der Geschwindigkeit (V) des Fahrzeugs und der Aufladung (CE) der elektrischen Energiereserve verbunden ist, wobei der Motordrehzahlsollwert (Krm) global mit der Geschwindigkeit (V) des Fahrzeugs zunimmt und umso höher ist, je geringer die Aufladung (CE) der elektrischen Energiereserve ist.

4. Verfahren nach Anspruch 3, **dadurch gekennzeichnet, dass** der Motordrehzahlsollwert ferner durch die erste Funktion (F1) mit einer Leistungsanforderung (Acc), wie beispielsweise einer Leistungsanforderung, die durch eine Position eines Gaspedals definiert ist, verbunden ist, wobei der Motordrehzahlsollwert (Krm) global mit der Leistungsanforderung (Acc) bei konstanter Geschwindigkeit (V) des Fahrzeugs zunimmt.

5. Verfahren nach einem der Ansprüche 3 und 4, **dadurch gekennzeichnet, dass** der Motordrehzahlsollwert (Krm) ferner durch die erste Funktion (F1) mit einer Temperatur (Tpc) eines katalytischen Auspufftopfes des Verbrennungsmotors (31) verbunden ist, wobei der Motordrehzahlsollwert (Krm) erhöht wird, wenn die Temperatur (Tpc) des Katalysators unter eine Funktionsschwelle (L_{T}) absinkt.

6. Verfahren nach einem der Ansprüche 3 bis 5, **dadurch gekennzeichnet, dass** der Motordrehzahlsollwert (Krm) ferner durch die erste Funktion (F1) mit einer Anlassdrehzahl (Rama) des Wechselstromgenerators (32) verbunden ist, wobei der Motordrehzahlsollwert (Krm) derart gewählt wird, dass die Drehzahl (Rm) des Verbrennungsmotors über der Anlassdrehzahl (Rama) des Wechselstromgenerators gehalten wird, oder dass der Verbrennungsmotor (31) in eine langsamere Betriebsart versetzt wird.

7. Verfahren nach einem der Ansprüche 3 bis 6, **dadurch gekennzeichnet, dass** der Motordrehzahlsollwert (Krm) ferner durch die erste Funktion (F1) mit einer maximalen Motordrehzahl (Rmx), die von der Temperatur (Tmt) des Verbrennungsmotors (31) abhängt, verbunden ist, wobei der Motordrehzahlsollwert (Krm) derart gewählt wird, dass die Drehzahl (Rm) des Verbrennungsmotors unter der maximalen Drehzahl (Rmx) gehalten wird.

8. Verfahren nach einem der Ansprüche 3 bis 7, **dadurch gekennzeichnet, dass** der Motordrehzahlsollwert (Krm) ferner durch die erste Funktion (F1) mit einer maximalen Schwelle (DRmx) von positiven Variationen der Motordrehzahl (Rm) verbunden ist, wobei die zeitliche Abweichung (dKrm/dt) des Motordrehzahlsollwerts (Krm) begrenzt ist, um die positiven Variationen der Motordrehzahl (Rm) unter der maximalen Schwelle (DRmx) von positiven Variationen zu halten.

9. Verfahren nach einem der Ansprüche 3 bis 8, **dadurch gekennzeichnet, dass** der Motordrehzahlsollwert (Krm) ferner durch die erste Funktion (F1) mit mindestens einem Bereich (Rmr) von Resonanzmotordrehzahlen verbunden ist, wobei der Motordrehzahlsollwert (Krm) derart gesteuert wird, dass die Motordrehzahl (Rm) außerhalb jedes Bereichs (Rmr) von Resonanzmotordrehzahlen angesiedelt wird.

10. Verfahren nach einem der vorhergehenden Ansprüche, **dadurch gekennzeichnet, dass** das Überdrehzahlsignal (Surr) durch eine zweite Funktion (F2) mit einer Niederfrequenzkomponente (Kxa_bf) des Erregungssollwerts (Kxa) des Wechselstromgenerators verbunden ist, wobei sich das Überdrehzahlsignal (Surr) zwischen einem Maximalwert (Surrx), den es bei Nichtverwendung für einen Bereich (Kxa_bf0) von relativ niedrigen Werten der Niederfrequenzkomponente (Kxa_bf) des Erregungssollwerts (Kxa) des Wechselstromgenerators annimmt, und einem Nullwert, den es bei Nichtverwendung für einen relativ hohen Wert (Kxa_bf1) der Niederfrequenzkomponente (Kxa_bf) des Erregungssollwerts (Kxa) des Wechselstromgenerators annimmt, entwickelt, wobei es Zwischenwerte durchläuft, die es bei Nichtverwendung für Werte der Niederfrequenzkomponente (Kxa_bf) des Erregungssollwerts (Kxa) des Wechselstromgenerators annimmt, die zwischen dem Bereich (Kxa_bf0) von relativ niedrigen Werten und dem relativ hohen Wert (Kxa_bf1) dieser Komponente liegen.

11. Verfahren nach Anspruch 10, **dadurch gekennzeichnet, dass** das Überdrehzahlsignal (Surr) ferner durch die zweite Funktion (F2) mit dem Motordrehzahlsollwert (Krm) und einer maximalen Motordrehzahl (Rmx) verbunden ist, wobei das Überdrehzahlsignal (Surr) verringert wird, wenn der Abstand (Rmx-Krm) zwischen dem Motordrehzahlsollwert (Krm) und der maximalen Motordrehzahl (Rmx) geringer als ein vorbestimmter Abstand (K_Rx) ist.

12. Verfahren nach einem der Ansprüche 10 und 11, **dadurch gekennzeichnet, dass** das Überdrehzahlsignal (Surr) ferner durch die zweite Funktion (F2) mit einer maximalen Schwelle (DRmx) von positiven Variationen (dRm/dt) der Motordrehzahl (Rm) verbunden ist, wobei das Überdrehzahlsignal (Surr) begrenzt ist, um die positiven Variationen der Motordrehzahl (Rm) unter der maximalen Schwelle (DRmx) von positiven Variationen zu halten.

13. Verfahren nach einem der Ansprüche 10 bis 12, **dadurch gekennzeichnet, dass** das Überdrehzahlsignal (Surr) ferner durch die zweite Funktion (F2) mit der Position (α) der Drosselklappe verbunden ist, wobei das Überdrehzahlsignal (Surr) einen Nullwert annimmt, wenn das Drosselventil völlig offen ist.

14. Verfahren nach einem der vorhergehenden Ansprüche, **dadurch gekennzeichnet, dass** der Positionssollwert (Kpp) des Drosselventils mit einer ersten Zeitkonstante (τ₁) in Richtung eines zunehmenden Öffnens der Drosselklappe und mit einer zweiten Zeitkonstante (τ₂) in Richtung eines abnehmenden Öffnens der Drosselklappe geregelt wird, und dass die erste Zeitkonstante (τ₁) größer als die zweite (τ₂) ist.

15. Verfahren nach einem der vorhergehenden Ansprüche, **dadurch gekennzeichnet, dass** es einen Schritt umfasst, darin bestehend, die Produktion von elektrischer Leistung mindestens durch den Elektromotor (1) zu überwachen, und einen Schritt, darin bestehend, selektiv den Verbrennungsmotor (31) in einen langsameren Betriebsmodus zu versetzen, wenn der Elektromotor (1) eine elektrische Leistung durch Umwandlung einer kinetischen oder potentiellen Energie des Fahrzeugs erzeugt.

16. Verfahren nach einem der vorhergehenden Ansprüche, **dadurch gekennzeichnet, dass** es einen Schritt umfasst, darin bestehend, die Impedanz (Z) einer Startbatterie (30) des Verbrennungsmotors (31) zu überwachen und die Inbetriebnahme des Verbrennungsmotors (31) zu hemmen, wenn die Impedanz (Z) eine vorbestimmte Grenze (Zx) überschreitet, zumindest wenn sich das Fahrzeug nicht im Stillstand befindet.
